# EUROPÄISCHE PATENTSCHRIFT

(11) **EP 2 986 659 B1**
(45) Veröffentlichungstag und Bekanntmachung des Hinweises auf die Patenterteilung: **25.01.2017**
(21) Anmeldenummer: 14720919.1
(22) Anmeldetag: 14.04.2014
(51) Int. Cl.: C08J 5/24, C08G 18/10, C08G 18/42, C08G 18/76, C08G 18/18

(54) **POLYURETHAN-PREPREGS UND DARAUS HERGESTELLTE FASERVERBUNDELEMENTE**
POLYURETHANE PREPREGS AND FIBRE COMPOSITE ELEMENTS MADE THEREFROM
FEUILLES PRÉ-IMPRÉGNÉES EN POLYURÉTHANE ET ÉLÉMENTS EN FIBRES COMPOSITES ISSUS DE CELLES-CI

(30) Priorität: 19.04.2013 EP 13164574
(43) Veröffentlichungstag der Anmeldung: 24.02.2016
(73) Patentinhaber: Covestro Deutschland AG, 51373 Leverkusen (DE)
(72) Erfinder: HUPKA, Florian, 40589 Düsseldorf (DE); SCHORNSTEIN, Marcel, 41462 Neuss (DE); NEFZGER, Hartmut, 50259 Pulheim (DE)
(74) Vertreter: Levpat
(86) Internationale Anmeldenummer: PCT/EP2014/057490
(87) Internationale Veröffentlichungsnummer: WO 2014/170252

(56) Entgegenhaltungen:
- DE-A1-102010 029 355
- DE-A1-102011 006 163
- US-A1- 2008 265 201

## Beschreibung

Gegenstand der Erfindung sind Prepregs und ein Verfahren zur Herstellung von lagerstabilen Polyurethan-Prepregs (preimpregnated fibers; vorimprägnierte Fasern) unter Verwendung von Polyolen mit hohem Anteil an sekundären Hydroxyl-Endgruppen und daraus hergestellte Faserverbundbauteile (Composite-Bauteile), die durch Imprägnieren von faserförmigen Materialien wie Geweben und Gelegen erhältlich sind, sowie ein Verfahren zu deren Herstellung.

Prinzipiell sind Faserverbundwerkstoffe aus einem Matrixmaterial aus Kunststoff und darin aufgenommene natürliche oder künstliche, organische oder anorganische Fasern aufgebaut. Faserverbundbauteile finden aufgrund ihres geringen spezifischen Gewichts und ihrer großen Steifigkeit und Belastbarkeit breite Anwendung in der Luft- und Raumfahrt, im Fahrzeug-, Maschinen- und Anlagenbau sowie in Sportgeräten.

Im Bereich der endlosfaserverstärkten Faserverbundbauteilen gibt es eine Vielzahl verschiedener Formgebungsprozesse, wie z.B. das Resin-Transfer-Molding- (RTM)-Verfahren, bei dem Fasergelege in eine Form eingelegt und drapiert werden, die Form geschlossen wird und das Harz anschließend in die Form injiziert wird. Die Vernetzung des Harzes in der Form wird typischerweise durch Wärmezufuhr bewerkstelligt. Eine Schwierigkeit und somit eine gewisse Beschränkung bei diesem Verfahren ist das Zuschneiden und Drapieren der Fasergelege in der Form. Das Zuschneiden der einzelnen Gewebelagen zu den unterschiedlichen Formgeometrien ist somit sehr zeit- und kostenintensiv. Vorformbare Faserverstärkungen mit einfachem Handling wären hier wünschenswert. Faserverstärkte Materialien in Form von Prepregs werden bereits in vielen industriellen Anwendungen wegen ihrer bequemen Handhabung und der erhöhten Effizienz bei der Verarbeitung im Vergleich zu der alternativen Nasslaminiertechnologie ("wet-lay-up"-Technologie) eingesetzt. Bei der industriellen Anwendung von Prepregs werden neben einem guten Handling, längere Lagerstabilitäten bei Raumtemperatur aber auch schnellere Zykluszeiten sowie niedrige und energieeffizientere Aushärtetemperaturen der Prepregs verlangt.

Neben Polyestern, Vinylestern und Epoxy-Systemen gibt es einige wenige Harze, die wegen ihrer Festigkeit und gleichzeitig ihrer hohen Zähigkeit zur Herstellung von Composite-Bauteilen verwendet werden. Dazu zählen auch Polyurethan-Harze, die wegen ihrer Zähigkeit und ihrer Festigkeit insbesondere zur Herstellung von Composite-Profilen oder im Pultrusionsverfahren eingesetzt werden. Polyurethan-Composite weisen auch gegenüber Vinylestern, ungesättigten Polyesterharzen (UPE) oder UPE-Urethan-Hybrid-Harzen eine überlegene Zähigkeit auf.

Einige Voraussetzungen an die Matrixkomponenten eines Prepreg-Systems sind, dass die Harze im sogenannten B-Zustand nicht oder kaum klebend sind, sie aber auch nicht vollständig ausgehärtet sind, vielmehr darf die Harzmatrix lediglich vorpolymerisiert sein, d.h. sie muss noch schmelzbar sein. Als sogenannter B-Zustand wird also das teilpolymerisierte Matrixharz im lagerfähigen aber noch reaktiven Prepreg bezeichnet. Diese Teilpolymerisation ist gerade so hoch, dass die Prepregs bei der Berührung nicht oder kaum kleben, jedoch das Matrixharz bei höherer Temperatur und gegebenenfalls Druck wieder schmilzt und schließlich aushärtet. Anforderungen an die vernetzte Harzmatrix bestehen in einer hohen Grenzflächenhaftung zu den Verstärkungsmaterialien und Einlagerungskomponenten und gegebenenfalls auch zu anderen Materialien, beispielsweise metallischen oder keramischen Materialien. Im vernetzten Zustand sind ferner hohe chemische Stabilität und Wärmeformbeständigkeit gefordert.

Prepregs auf der Basis lagerstabiler reaktiver oder hochreaktiver Polyurethanzusammensetzung sind aus DE 102009001793, DE 102009001806 und DE 10201029355 bekannt. Die hierbei verwendeten, im Wesentlichen aliphatischen Polyisocyanate sind entweder intern blockiert (z.B. als Uretdion) und/oder mit externen Blockierungsmitteln blockiert. Der Nachteil ist, dass die Aushärtetemperatur je nach System zwischen 120°C und 200°C liegt und die Aushärtezeit/Zykluszeit mit bis zu 60 Minuten sehr lang ist, was zu hohen Energie- und Herstellkosten führt. Zudem sind die erhaltenen Glasübergangstemperaturen bei der Verwendung von aliphatischen Polyurethansystemen niedriger im Vergleich zu aromatischen Systemen.

Die Aufgabe der vorliegenden Erfindung war es, ein Matrixmaterial zu finden, das eine sehr niedrige Viskosität besitzt, um eine gute Benetzung des faserförmigen Trägers zu gewährleisten, und das eine genügend lange Verarbeitungszeit zwischen dem Mischen der Komponenten und dem Imprägnieren der Verstärkungsfasern mit dem noch nicht ausreagierten Matrixmaterial aufweist. Eine weitere Aufgabe der Erfindung war es, Prepregs zur Verfügung zu stellen, die mittels eines einfachen Verfahrens hergestellt werden können, im sogenannten B-Zustand mehrere Wochen bei Raumtemperatur lagerstabil sind, niedrige Aushärtetemperaturen besitzen und schnell aushärten, um kurze Zykluszeiten zu erhalten. Darüber hinaus sollen die Prepregs nahezu klebfrei sein, um sie einfach weiter verarbeiten zu können.

Überraschend wurde nun gefunden, dass die Herstellung von lagerstabilen, aber dennoch reaktiven Prepregs durch Imprägnierung von Verstärkungsfasern mit einem sehr niedrigviskosen Polyurethansystem mit hoher Kennzahl gelingt, wobei diese Prepregs eine im Vergleich zu bereits existierenden Prepreg-Systemen extrem schnelle Aushärtezeit aufweisen. Die erfindungsgemäßen Prepregs weisen verbesserte Verarbeitungseigenschaften und schnellere Zykluszeiten gegenüber den in DE-A 102010029355 (WO 2011/147688) beschriebenen Prepregs auf.

Gegenstand der Erfindung sind daher Prepregs enthaltend eine flächige Faserschicht, die mit nicht vollständig ausgehärtetem Polyurethan (Matrixmaterial) mit einem NCO-Gehalt von 8 Gew.-% bis 16 Gew.-% und mit einem T_{g}-Wert von unter 40°C, bevorzugt von unter 35°C (gemessen nach DIN EN ISO 53765-A-20) getränkt ist, wobei das nicht vollständig ausgehärtete Polyurethan erhältlich ist aus einem Reaktionsgemisch bestehend aus
A) einer Isocyanatkomponente ausgewählt aus der Gruppe bestehend aus aromatischen Di-, aromatischen Polyisocyanaten, deren polymere Homologen und Abmischungen daraus,
B) einer Polyolkomponente aus einem oder mehreren Polyesterpolyolen mit sekundären Hydroxyl-Endgruppen, deren Gehalt an sekundären Hydroxyl-Endgruppen zwischen 40 Mol-% und 100 Mol-%, bezogen auf den Gesamtgehalt aller Hydroxyl-Endgruppen in der Polyolkomponente liegt, mit einer zahlenmittleren OH-Zahl von 15 bis 1000 mg KOH/g und, einer zahlenmittleren Funktionalität von 1,9 bis 2,5,
C) einem oder mehreren latenten Katalysatoren, die bei Temperaturen von 50° bis 100°C katalytisch wirksam sind,
D) gegebenenfalls Hilfs- und/oder Zusatzstoffen, ausgenommen Polyepoxide,
wobei das Reaktionsgemisch bei 40 °C eine anfängliche Viskosität von 30 bis 500 mPas (gemessen nach DIN EN ISO 53019), bevorzugt 70 bis 250 mPas, besonders bevorzugt 70 bis 150 mPas aufweist und das Verhältnis der Anzahl der NCO-Gruppen der Komponente A) zu der Anzahl der OH-Gruppen der Komponente B) bevorzugt von 1,35:1 bis 10:1, besonders bevorzugt von 1,4:1 bis 5,0:1 ist.

Der NCO-Wert des nicht vollständig ausgehärteten Polyurethans gibt den Gewichtsanteil an nicht reagierten Isocyanatgruppen im Polyurethan an. Der NCO-Wert wird über einen Zeitraum von mehreren Wochen bestimmt. Dieser NCO-Wert ist außerdem ein Indiz für die Lagerstabilität der Prepregs.

Der NCO-Wert der lagerstabilen Prepregs wird wöchentlich über einen Zeitraum von 12 Wochen bestimmt. Der NCO-Wert der erfindungsgemäßen Prepregs liegt in einem Bereich von 8 Gew.-% bis 16 Gew.-%, bevorzugt von 10 Gew.-% bis 16 Gew.-% und ganz besonders bevorzugt von 10 Gew.-% bis 14 Gew.-%. Der NCO-Wert der erfindungsgemäßen Prepregs ändert sich, auch ohne Zusatz von externen Blockierungsmitteln beziehungsweise sogenannten Stoppern, über einen Zeitraum von 12 Wochen kaum. Der NCO-Wert wird nach DIN EN ISO 14896:2009-07-Verfahren A bestimmt. Ein weiterer Gegenstand der Erfindung sind flächige Faserverbundbauteile enthaltend mindestens ein erfindungsgemäßes Prepreg, wobei das oder die Prepregs vollständig ausgehärtet ist bzw. sind.

Die vollständige Aushärtung erfolgt vorzugsweise bei einer Temperatur von 80 °C bis 140 °C.

Ein weiterer Gegenstand der vorliegenden Erfindung ist ein Verfahren zur Herstellung der erfindungsgemäßen Prepregs, welches dadurch gekennzeichnet ist, dass
i) die Komponenten A) bis D) bei Temperaturen von 10° bis 80°C, vorzugsweise von 20 C bis 50°C, zur Herstellung einer Reaktivmischung vermischt werden, wobei die Komponenten A) bis D) die folgende Bedeutung haben
   A) einer Isocyanatkomponente ausgewählt aus der Gruppe bestehend aus aromatischen Di-, aromatischen Polyisocyanaten, deren polymere Homologen und Abmischungen daraus
   B) einer Polyolkomponente aus einem oder mehreren Polyesterpolyolen mit sekundären Hydroxyl-Endgruppen, deren Gehalt an sekundären Hydroxyl-Endgruppen zwischen 40 Mol-% und 100 Mol-%, bezogen auf einen Gesamtgehalt aller Hydroxyl-Endgruppen in der Polyolkomponente liegt, mit einer zahlenmittleren OH-Zahl von 15 bis 1000 mg KOH/g und einer zahlenmittleren Funktionalität von 1,9 bis 2,5,
   C) einem oder mehreren latenten Katalysatoren, die bei Temperaturen von 50° bis 100°C katalytisch wirksam sind,
   D) gegebenenfalls Hilfs- und/oder Zusatzstoffen, ausgenommen Polyepoxide,
   und wobei die Reaktivmischung bei 40 °C eine anfängliche Viskosität von 30 bis 500 mPas (gemessen nach DIN EN ISO 53019), bevorzugt 70 bis 250 mPas, besonders bevorzugt 70 bis 150 mPas aufweist und das Verhältnis der Anzahl der NCO-Gruppen der Komponente A) zu der Anzahl der OH-Gruppen der Komponente B) bevorzugt von 1,35:1 bis 10:1, besonders bevorzugt von 1,4:1 bis 5,0:1 liegt,
ii) die Reaktivmischung aus i) auf eine flächige Faserschicht aufgetragen wird und teilweise härtet.

Die Faserschicht wird also mit der Reaktivmischung imprägniert.

Ein weiterer Gegenstand der Erfindung ist ein Verfahren zur Herstellung der erfindungsgemäßen Faserverbundbauteile, welches dadurch gekennzeichnet ist, dass
ein oder mehrere erfindungsgemäß hergestellte Prepregs bei 80 C bis 140 C, bevorzugt bei 110°C bis 140°C und einem Druck von 1 bis 100 bar, bevorzugt von 1 bis 50 bar und besonders bevorzugt von 1 bis 10 bar oder unter Vakuum innerhalb von 1 bis 4 Minuten, bevorzugt von 1 bis 3 Minuten vollständig ausgehärtet werden.

Die Viskositäten werden nach DIN EN ISO 53019 (Platte/Platte) bestimmt.

Die erfindungsgemäßen Prepregs bzw. die daraus hergestellten Faserverbundbauteile können in unterschiedlichen Anwendungen im Bereich der Bau-, der Automobil- (z.B. Karosseriebauteile), der Luft- und Raumfahrt-Industrie (Flugzeugbau), des Strassenbaus (z.B. Kanaldeckel), der Energietechnik (Windkraftanlagen; z.B. Rotorblätter), im Boots- und Schiffbau und in hochbelasteten Strukturen eingesetzt werden.

Das Prinzip des Imprägnierverfahrens zur Herstellung der Prepregs besteht darin, dass zunächst eine homogene reaktive Polyurethanzusammensetzung aus den Komponenten A) bis D), bei Temperaturen unterhalb von 80 °C (vorzugsweise von 10° bis 75°C) hergestellt wird, die anschließend direkt bei der Mischtemperatur von < 80°C oder gegebenenfalls nach Abkühlung bei Raumtemperatur auf den faserförmigen Träger (flächige Faserschicht) aufgebracht wird, das heißt, es erfolgt eine Imprägnierung des faserförmigen Trägers mit dem hergestellten Polyurethansystem aus A), B), C) und D). Danach können die lagerfähigen Prepregs zu einem späteren Zeitpunkt zu Faserverbundbauteilen weiterverarbeitet werden. Durch das erfindungsgemäße sehr niedrigviskose Polyurethansystem erfolgt eine sehr gute Imprägnierung des faserförmigen Trägers. Eine weitere Vernetzungsreaktion durch thermische Belastung der Polyurethanzusammensetzung wird durch das Arbeiten bei Raumtemperatur vermieden. Bei der Imprägnierung können unterschiedliche Varianten angewendet werden. Das Polyurethansystem kann z.B. in einem Walzenstuhl oder mittels eines Rakels aufgebracht werden.

Ein Vorteil der erfindungsgemäß eingesetzten Reaktionsmischungen ist das Vermischen der Komponente A), B), C), und D) bei niedrigen Temperaturen von 10°C bis 80°C, bevorzugt von 20°C bis 60°C und besonders bevorzugt von 20°C bis 40°C, so dass ein Aufbau von Exothermie vermieden werden kann und das Reaktionsgemisch niedrigviskos bleibt und somit gut auf das Trägermaterial aufgebracht werden kann. Bei den bisherigen Systemen müssen die Komponenten bei Temperaturen zwischen 80°C und 120°C vermischt werden, was wegen des Anreagierens des reaktiven Matrixmaterials problematisch ist.

Die erfindungsgemäß eingesetzten Reaktionsmischungen benötigen im Gegensatz zu den in DE-A 102010029355, DE-A 102009001793 und DE-A 102009001806 verwendeten Reaktionsmischungen weder externe Blockierungsmittel noch blockierte Isocyanatkomponenten. Mit den erfindungsgemäß eingesetzten Reaktionsmischungen ist ein schnelles Aushärten der Prepregs bei niedrigen Temperaturen und eine schnelle Fertigung der Faserverbundbauteile möglich.

Die erfingdungsgemäß eingesetzte Reaktionsmischung kann auf Gießmaschinen mit Statikmischern oder mit dynamischen Mischern hergestellt werden, da nur eine kurze Mischzeit benötigt wird. Dies ist bei der Herstellung der erfindungsgemäßen Faserverbundbauteile von großem Vorteil, da die Reaktivharzmischung für eine gute Tränkung möglichst dünnflüssig sein muss. Eine Mischung, die erst vorab für einige Minuten vermischt werden muss, zeigt durch die Bildung von Urethangruppen bereits eine zu hohe Viskosität.

Die erfindungsgemäß hergestellten Prepregs weisen eine sehr hohe Lagerstabilität von mehreren Wochen bei Raumtemperatur auf. Die so hergestellten Prepregs sind flexibel und nahezu klebfrei und können daher einfach weiterverarbeitet werden.

Zur Bestimmung der Lagerstabilität der Prepregs wird der NCO-Wert über einen Zeitraum von mehreren Wochen bestimmt. Der NCO-Wert gibt den Gewichtsanteil an Isocyanatgruppen im Isocyanatgemisch, beziehungsweise im Prepolymer an.

Der NCO-Wert der lagerstabilen Prepregs wird wöchentlich über einen Zeitraum von 12 Wochen bestimmt. Der NCO-Wert der erfindungsgemäßen Prepregs liegt zwischen 8 Gew.-% und 16 Gew.-%, bevorzugt zwischen 10 Gew.-% und 16 Gew.-% und ganz besonders bevorzugt zwischen 10 Gew.-% und 14 Gew.-%. Der NCO-Wert der erfindungsgemäßen Prepregs liegt, auch ohne Zusatz von externen Blockierungsmitteln beziehungsweise sogenannten Stoppern, über einen Zeitraum von 12 Wochen in den angegebenen Grenzbereichen. Der NCO-Wert [in Gew.-%] wird nach DIN EN ISO 14896:2009-07-Verfahren A bestimmt.

Ein weiterer Vorteil der erfindungsgemäß eingesetzten Reaktionssysteme im Vergleich zu den Polyurethansystemen aus DE-A 102010029355, DE 102009001793 und DE 102009001806 ist, dass beim Einsatz von aromatischen Polyisocyanaten Faserverbundbauteile mit hohen Glasübergangstemperaturen von über 130 °C erhalten werden und dass ein Aushärten bei niedrigen Temperaturen möglich ist.

Die Prepregs können in Form einer Schicht und in Form mehrerer über einander liegender Schichten zu einem Faserverbundbauteil verarbeitet werden. Vor der Vernetzung des Matrixmaterials werden die Prepregs vorzugsweise zugeschnitten, gegebenenfalls vernäht oder anderweitig fixiert und in einer geeigneten Form unter Druck, drucklos, gegebenenfalls unter Anlegen von Vakuum verpresst. Im Rahmen der vorliegenden Erfindung erfolgt dieser Vorgang der Herstellung der Faserverbundbauteile aus den Prepregs je nach Aushärtungszeit bei Temperaturen unterhalb von 140 °C, bevorzugt von 110° bis 140°C, besonders bevorzugt von 110° bis 135°C.

Während der Verarbeitung der Prepregs zu den Faserverbundbauteilen (z. B. durch Verpressen bei erhöhten Temperaturen) erfolgt durch Aufschmelzen des zunächst anreagierten Matrixmaterials zu einer niedrigviskosen Polyurethanzusammensetzung eine sehr gute Imprägnierung des faserförmigen Verstärkungsmaterials, bevor durch die vollständige Vernetzungsreaktion der Polyurethanzusammensetzung bei erhöhten Temperaturen die komplette Polyurethanmatrix durchhärtet. Vorzugsweise wird die Werkzeugkavität der Form vor dem Verpressen des Prepregs mit einem Trennmittel versehen. Es können weitere Schutz- oder Dekor-Schichten vor dem Einbringen des Fasermaterials zur Herstellung des Prepregs in das Werkzeug eingetragen werden, wie beispielsweise eine oder mehrere Gelcoatschichten.

Besonders bevorzugt ist ein Faserverbundbauteil, welches in der Faserschicht ein Polyurethan aufweist, das aus 45-80 Gew.-%, bevorzugt 50-70 Gew.-% Polyisocyanaten (A), 25-50 Gew.-%, bevorzugt 30-45 Gew.-% Polyolen (B), 0,1-3 Gew.-%, bevorzugt 0,3-1,4 Gew.-% Katalysator (C) und 0-3 Gew.-%, bevorzugt 0-1,5 Gew.-% Additiven (D) erhältlich ist, wobei die Summe der Gewichtsanteile der Komponenten 100 Gew.-% ergibt.

Der Faseranteil im Faserverbundteil beträgt vorzugsweise mehr als 45 Gew.-%, besonders bevorzugt mehr als 50 Gew.-%, bezogen auf das Gesamtgewicht des Faserverbundbauteils.

Als Polyisocyanatkomponente A) kommen die üblichen aromatischen Di- und/oder Polyisocyanate zum Einsatz. Beispiele solcher geeigneten Polyisocyanate sind 1,4-Phenylendiisocyanat, 2,4-und/oder 2,6-Toluylendiisocyanat (TDI), 1,5-Naphthylendiisocyanat, 2,2'-und/oder 2,4'- und/oder 4,4'-Diphenylmethandiisocyanat (MDI) und/oder höhere Homologe (pMDI), 1,3- und/oder 1,4-Bis-(2-isocyanato-prop-2-yl)-benzol (TMXDI), 1,3-Bis-(isocyanatomethyl)benzol (XDI). Als Isocyanat wird vorzugsweise Diphenylmethandiisocyanat (MDI) und insbesondere Gemische aus Diphenylmethandiisocyanat und Polyphenylenpolymethylenpolyisocyanat (pMDI) verwendet. Die Gemische aus Diphenylmethandiisocyanat und Polyphenylenpolymethylenpolyisocyanat (pMDI) haben einen bevorzugten Monomergehalt von zwischen 60 und 100 Ges.-%, bevorzugt zwischen 70 und 95 Ges.-%, besonders bevorzugt zwischen 80 und 90 Ges.-%. Der NCO-Gehalt des verwendeten Polyisocyanates sollte vorzugsweise über 25 Gew.-%, bevorzugt über 30 Gew.-% liegen. Die Viskosität des Isocyanates sollte vorzugsweise ≤ 250 mPas (bei 25°C), bevorzugt ≤ 100 mPas (bei 25°C) und besonders bevorzugt von ≤ 30 mPas (bei 25°C) sein.

Die OH-Zahl der Komponente B) gibt im Falle eines einzelnen zugesetzten Polyols dessen OH-Zahl an. Im Falle von Mischungen wird die zahlenmittlere OH-Zahl angegeben. Dieser Wert kann anhand von DIN EN ISO 53240 bestimmt werden.

Die Polyolkomponente (Polyol oder Polyolgemisch) B) weist eine OH-Zahl (OHZ), ggf. mittlere OHZ von 15 bis 1000 mg KOH/g, bevorzugt von 50 bis 400 mg KOH/g und besonders bevorzugt von 60 bis 300 mg KOH/g auf. Bevorzugt hat die eingesetzte Polyolkomponente eine zahlenmittlere Funktionalität von 1,9 bis 2,5. Unter Funktionalität wird im Rahmen dieser Anmeldung die Anzahl von NCO-reaktiven Gruppen pro Molekül verstanden.

Erfindungsgemäß können als Polyolkomponente B) Polyetherpolyole, Polyesterpolyole, Polyetheresterpolyole oder Polycarbonatpolyole eingesetzt werden, bevorzugt sind Polyesterpolyole. Erfindungsgemäß verwendbare Polyesterpolyole sind bevorzugt Kondensationsprodukte aus niedermolekularen Polycarbonsäuren und/oder deren Derivaten (im Folgenden als Polycarbonsäuren bezeichnet) (1) und Polyolkomponenten (2). Die niedermolekularen Polycarbonsäuren (1) können aliphatisch oder aromatisch sein. Sie sind bevorzugt ausgewählt aus der Gruppe:
Bernsteinsäure, Fumarsäure, Maleinsäure, Maleinsäureanhydrid, Glutarsäure, Adipinsäure, Sebacinsäure, Korksäure, Azelainsäure, 1,10-Decandisäure, 1,12-Dodecandisäure, Phthalsäure, Phthalsäureanhydrid, Isophthalsäure, Terephthalsäure, Pyromellitsäure und
Trimellitsäure, ggf. deren Dialkylesterderivate, sowie ggf. innere Anhydride (Lactone), wie z.B. Caprolacton

Selbstverständlich können auch Gemische dieser niedermolekularen Polycarbonsäuren (1) untereinander oder mit weiteren Polycarbonsäuren (1) eingesetzt werden, wobei im letzteren Fall die genannten Polycarbonsäuren (1) bevorzugt mindestens 90 Mol-% aller Carboxylgruppen beisteuern.

Die erfindungsgemäß einsetzbaren Polycarbonsäuren (1) sind entweder kommerziell erhältlich oder durch dem Fachmann bekannte Synthesen einfach zugänglich.

Die mit den Polycarbonsäuren (1) umzusetzenden Diolkomponenten (2) bestehen, bezogen auf die Gesamtmasse der Diolkomponente (2), bevorzugt zu 50 Gewichts-% bis 100 Gewichts-%, besonders bevorzugt zu 70 Gewichts-% bis 100 Gewichts-%, ganz besonders bevorzugt zu 80 Gewichts-% bis 100 Gewichts-% aus niedermolekularen Diolen mit jeweils einer oder zwei sekundären Hydroxylgruppe(n) (2a). Die niedermolekularen Diole mit jeweils einer oder zwei sekundären Hydroxylgruppe(n) (2a) haben insbesondere 3 bis 18, bevorzugt 3 bis 12 Kohlenstoffatome. Die erfindungsgemäß einsetzbaren niedermolekularen Diole mit einer oder zwei sekundären Hydroxylgruppe(n) (2a) sind bevorzugt ausgewählt aus der Gruppe 1,2-Propylenglykol, Homologe des 1,2-Propylenglykols (wie z.B. Dipropylenglykol, Tripropylenglykol, Tetrapropylenglykol, usw.), 2,3-Butandiol, 1,2-Pentandiol, 3-Hexin-2,5-diol, 1,2-, 1,3- und 1,4-Cyclohexandiol und allen Sterioisomeren des Dianhydrosorbitols.

Selbstverständlich können auch Gemische dieser Diole (2a) untereinander oder mit weiteren Diolen oder höherfunktionellen Alkoholen (2b) eingesetzt werden.

Höherfuntionelle Alkohole (2b) können beispielsweise 1,1,1-Trimethylolpropan, Pentaerythrit, Glycerin sein.

Die zu jeweils 100 Gewichts-% fehlenden Polyolkomponenten (2c) können der Gruppe bestehend aus Ethylenglykol, Diethylenglykol, Triethylenglykol und höhere Homologe des Ethylenglykols, 1,3-Propandiol, 1,4-Butandiol, 1,5-Pentandiol, 1,6-Hexandiol, 1,8-Octandiol, 1,10-Decandiol, und 1,12-Dodecandiol entstammen.

Die Umsetzung der Polycarbonsäuren (1) mit der Diolkomponente (2) erfolgt durch die dem Fachmann bekannte Polykondensationsreaktion, ggf. bei Einsatz von Lactonen Polyadditionsreaktion.

Selbstverständlich können alle eingesetzten Ausgangskomponenten, sowohl die Polyolkomponenten als auch die Polycarbonsäuren, auch biobasierend sein.

Die Polyolkomponente B) kann auch Fasern, Füllstoffe und Polymere enthalten.

Als latente Katalysatoren C) werden bevorzugt Katalysatoren eingesetzt, die im Bereich zwischen 50°C und 100°C katalytisch aktiv sind. Typische latente Katalysatoren sind beispielsweise blockierte Amin- und Amidin-Katalysatoren der Hersteller Air Products (wie z.B. Polycat^{®} SA-1/10, Dabco KTM 60) und Tosoh Corporation (wie z.B. Toyocat^{®} DB 2, DB 30, DB 31, DB 40, DB 41, DB 42, DB 60, DB 70). Es können aber auch alle weiteren, typischen latenten Katalysatoren aus der Polyurethanchemie mit einer sogenannten Schalttemperatur von 50°C bis 100°C eingesetzt werden.

Gegebenenfalls können Hilfs- und/oder Zusatzstoffe (Additive) D) zugesetzt werden. Hierbei handelt es sich beispielsweise um Entlüfter, Entschäumer, Trennmittel, Füllstoffe, Fließhilfen, organische oder anorganische Farbstoffe, Treibmittel und Verstärkungsstoffe. Weitere bekannte Additive und Zusatzmittel können bei Bedarf verwendet werden. Polyepoxide werden nicht eingesetzt.

Als Fasermaterial können geschlichtete oder ungeschlichtete Fasern, beispielsweise Glasfasern, Kohlefasern, Metallfasern (z.B. Stahl- bzw. Eisenfasern), Naturfasern, Aramidfasern, Polyethylen-fasern, Basaltfasern oder Carbon Nanotubes (CNTs) eingesetzt werden. Besonders bevorzugt sind Kohlefasern. Die Fasern können als Kurzfasern mit einer Länge von 0,1 bis 50 mm verwendet werden. Bevorzugt sind endlosfaserverstärkte Verbundbauteile durch den Einsatz von kontinuierlichen Fasern. Die Fasern in der Faserschicht können unidirektional, regellos verteilt oder verwoben angeordnet sein. In Bauteilen mit einer Faserschicht aus mehreren Lagen besteht die Möglichkeit der Faserorientierung von Lage zu Lage. Hierbei kann man unidirektionale Faserschichten, Kreuzverbundschichten oder multidirektionale Faserschichten herstellen, wobei unidirektionale oder verwebte Lagen übereinander geschichtet werden. Besonders bevorzugt sind Faser-Halbzeuge als Fasermaterial, wie beispielsweise Gewebe, Gelege, Geflechte, Matten, Vliese, Gestricke und Gewirke oder 3D-Faser-Halbzeuge.

Die erfindungsgemäßen Faserverbundbauteile können beispielsweise zur Herstellung von Karosseriebauteilen von Automobilen oder im Flugzeugbau, Rotorblättern von Windkraftanlagen, zur Herstellung von Bauteilen des Gebäude- bzw. Straßenbaus (z.B. Kanaldeckel) und sonstigen hochbelasteten Strukturen verwendet werden.

Die Erfindung soll anhand der nachfolgenden Beispiele näher erläutert werden.

### Beispiele:

### Herstellung der Polyolkomponente B) mit ca. 66 Mol-% sekundären Hydroxyl-Endgruppen: Polyol 1

In einem 2-Liter-4-Halskolben, ausgestattet mit Heizpilz, mechanischem Rührwerk, Innenthermometer, 40-cm-Füllkörper-Kolonne, Kolonnenkopf, absteigendem Intensivkühler, sowie Membranvakuumpumpe wurden 985 g (6,74 Mol) Adipinsäure (in der Terminologie dieser Anmeldung (1), also eine Polycarbonsäure (1)), 757 g (9,95 Mol) 1,2-Propylenglykol (in der Terminologie dieser Anmeldung (2a), welches in diesem Fall der einzige Bestandteil der Diolkomponente (2) ist) und 30 mg (20 ppm) Zinn-II-chlorid-Dihydrat unter Stickstoffüberschleierung vorgelegt und unter Rühren im Verlauf von 3 Stunden auf 200 °C erhitzt, wobei bei einer Kopftemperatur von 100 °C Wasser abdestillierte. Man senkte anschließend im Verlauf von 3 Stunden den Innendruck langsam auf 160 mbar ab und vervollständigte die Reaktion für weitere 40 Stunden. Man bestimmte die Hydroxylzahl zu 158,0 mg KOH/g, setzte 74,1 g (0,97 Mol) 1,2-Propylenglykol nach und äquilibrierte bei Normaldruck und 200 °C für 5 Stunden.

### Analyse des Polyols 1:

| | |
|---|---|
| Hydroxylzahl: | 221 mg KOH/g |
| Säurezahl: | 0,45 mg KOH/g |
| Viskosität: | 195 mPas (50 °C) |
| Sekundäre OH-Gruppen: | ca. 66 Mol-% |

### Herstellung der Vergleichspolyolkomponente B) mit ca. 33 Mol-% sekundären Hydroxyl-Endgruppen: Polyol 2

In einem 2-Liter-4-Halskolben, ausgestattet mit Heizpilz, mechanischem Rührwerk, Innenthermometer, 40-cm-Füllkörper-Kolonne, Kolonnenkopf, absteigendem Intensivkühler, sowie Membranvakuumpumpe wurden 2649 g (18,13 Mol) Adipinsäure (in der Terminologie dieser Anmeldung (1), also eine Polycarbonsäure (1)), 821 g (10,79 Mol) 1,2-Propylenglykol (in der Terminologie dieser Anmeldung (2a)), 1182 g (15,53 Mol) 1,3-Propylenglycol (in der Terminologie dieser Anmeldung (2c)) und 80 mg (20 ppm) Zinn-II-chlorid-Dihydrat unter Stickstoffüberschleierung vorgelegt und unter Rühren im Verlauf von 3 Stunden auf 200 °C erhitzt, wobei bei einer Kopftemperatur von 100 °C Wasser abdestillierte. Man senkte anschließend im Verlauf von 3 Stunden den Innendruck langsam auf 160 mbar ab und vervollständigte die Reaktion für weitere 60 Stunden. Man bestimmte die Hydroxylzahl zu 223,0 mg KOH/g.

### Analyse des Polvols 2:

- Hydroxylzahl:: 223 mg KOH/g
- Säurezahl:: 0,86 mg KOH/g
- Viskosität:: 180 mPas (50 °C)
- Sekundäre OH-Gruppen:: ca. 33 Mol-%

Die Bestimmung des Anteils an sekundären OH-Endgruppen erfolgte über NMR-Spektroskopie

### Allgemeine Herstellungsvorschrift:

Es wurden lagerstabile Prepregs aus den erfindungsgemäßen Systemen aus Polyisocyanaten, Polyolen, Additiven und latenten Katalysatoren hergestellt und anschließend zu einem Faserverbundbauteil ausgehärtet. Für die Herstellung des faserverstärkten Prepregs durch Imprägnieren wurde ein dünner Film des erfindungsgemäßen Polyurethansystems auf das Glasfasergewebe aufgetragen und auf der Oberfläche verteilt, so dass ein Glasfasergehalt von etwa 55 Gewichts-%, bezogen auf das spätere Bauteil, erreicht wurde. Anschließend wurden die Prepregs in einem Vakuumbeutel verpackt und bei Raumtemperatur gelagert. Die Prepregs wurden aus dem Beutel genommen und anschließend bei 130°C und 5 bar innerhalb von zwei Minuten zu einem Faserverbundbauteil verpresst. Der Glasfasergehalt wurde durch Veraschung der Probenkörper nach DIN EN ISO 1172 bestimmt.

Das NCO/OH Verhältnis gibt das Verhältnis der Anzahl der NCO-Crruppen in der Polyisocyanatkomponente A) zu der Anzahl der OH-Gruppen in der Komponente B) an.

### Verwendete Ausgangsverbindungen:

Komponente A): Desmodur^{®} VP.PU 60RE11 (Polyisocyanat der Firma Bayer MaterialScience AG; Gemisch von Diphenylmethandiisocyanat und Polyphenylenpolymethylenpolyisocyanat; NCO-Gehalt 32,6 Gew.-%; Viskosität bei 25 °C: 20 mPas)
Komponente B): lineares Polyesterpolyol aus Adipinsäure und 1,2-Propylenglycol, Hydroxylzahl ca.220 mg KOH/g und Funktionalität 2, Viskosität bei 25°C: 985±50 mPas
Komponente C): Toyocat^{®} DB 40: latenter Katalysator (blockiertes Amin) der Firma TOSOH Corporation, Schalttemperatur ca 70 °C

Glasfasergewebe: HPT 1040-E0/3AC11, 90°/0° der Firma SGL KÜMPERS GmbH & Co. KG, Flächengewicht 1036 g/m²

### Verwendete Messgeräte und Normen:

DSC: Messgerät DSC Q 20 V24.8 Build 120 der Fa. Texas Instruments
Viskosität gemäß DIN EN ISO 53019 (d/dt = 60 l/s): d/dt = Scherrate (Viskosimeter: MCR 501 der Fa. Anton Paar)
NMR: NMR-Spektrometer Fa.Bruker DPX 400 (Lösungsmittel: Chloroform-d1)
DIN EN ISO 53765-A-20: A-20 = Bestimmung des Glasübergangspunktes mit einer Temperaturänderung von 20 Kelvin/Sekunde
DIN EN ISO 14896:2009-07-Verfahren A: Verfahren A = NCO-Wertbestimmung mittels Titration

### Beispiel 1:

184,1 g Komponente A) wurden mit 120,0 g der Polyolkomponente B) (Polyol 1) und 2,9 g Toyocat^{®} DB 40 bei Raumtemperatur vermischt und mit einem Speedmixer homogenisiert. Danach wurde ein dünner Film dieses Gemisches auf ein Glasfasergewebe aufgetragen und auf der Oberfläche verteilt. Der NCO-Wert des Prepregs lag nach 24 Stunden bei 13,0 %. Das Prepreg wurde anschließend bei 130 °C und 5 bar zu einem Faserverbundbauteil verpresst.

### Vergleichsbeispiel 2:

186,6 g Komponente A) wurden mit 120 g der Polyolkomponente B) (Polyol 2) und 2,9 g Toyocat^{®} DB 40 bei Raumtemperatur vermischt und mit einem Speedmixer homogenisiert. Der NCO-Wert des Reaktionsgemisches wurde auf 13 % eingestellt. Die Herstellung eines Prepregs war aufgrund der hohen Reaktivität und dem sehr schnellen Viskositätsanstiegs nicht möglich. Nach 30 Sekunden war das Reaktionsgemisch nahezu abreagiert. Der NCO-Wert des Prepregs lag nach 2 Stunden bei unter 5 %.

### Vergleichsbeispiel 3:

Die Vergleichsdaten stammen aus DE-A 102010029355 (Beispiel 1) und sind in DE-A 102010029355 unter dem Punkt "Lagerstabilität der Prepregs" zu finden.

### Vergleichsbeispiel 4:

155,7 g Komponente A) wurden mit 120 g der Polyolkomponente B) (Polyol 1) und 2 g DY 9577^{®} (Trichlor(N,N-dimethyloctylamin)bor der Fa. Huntsman Corporation, Smp. 25-36 °C, Schalttemperatur ca. 120 °C) bei Raumtemperatur vermischt und mit einem Speedmixer homogenisiert. Danach wurde ein dünner Film dieses Gemisches auf ein Glasfasergewebe aufgetragen und auf der Oberfläche verteilt. Der NCO-Wert des Prepregs lag nach 24 Stunden bei 11 %. Das Prepreg wurde anschließend bei 130°C und 5 bar zu einem Faserverbundbauteil verpresst.

**Tabelle 1:**

| Beispiele | Beispiel 1 | Vergleichsbeispiel 2 | Vergleichsbeispiel 3 | Vergleichsbeispiel 4 |
|---|---|---|---|---|
| NCO/OH Äquivalentverhältnis | 2,98:1 | 2,95:1 | 1:1 | 2,32:1 |
| Viskosität bei 40 °C (direkt nach dem Vermischen) [mPas]; gemessen nach DIN EN ISO 53019 (d/dt = 60 l/s) | 10 mPas | nicht messbar, da zu reaktiv | keine homogene Schmelze, da Schmelzpunkt von Fineplus^{®} PE 8078 >60°C | 10 mPas |
| Lagerfähigkeit des Prepregs [nach Tagen]; gemessen anhand der Glasübergangstemperatur Tg [°C] nach DIN EN ISO 53765-A-20 | nach 7 Tagen: -6 | nach 2 Stunden: 88 | nach 2 Tagen: 50 | nach 7 Tagen: -9,3 |
| | nach 14 Tagen: -3,1 | | nach 17 Tagen: 55 | nach 14 Tagen: -9,6 |
| | nach 28 Tagen: 1 | | nach 30 Tagen: 56 | nach 28 Tagen: -9,1 |
| | nach 49 Tagen: 6,6 | | nach 47 Tagen: 55 | nach 49 Tagen: -7,9 |
| | nach 56 Tagen: 6,1 | | | nach 77 Tagen: -4,2 |
| | nach 84 Tagen: 8,4 | | | nach 84 Tagen: -4,1 |
| NCO-Wert des Prepregs [nach Tagen]; gemessen nach DIN EN ISO 14896:2009-07-Verfahren A [Gew.-%] | nach 1 Tag: 13,0 | nach 2 Stunden: < 5 | - | nach 7 Tagen: 10,5 |
| | nach 14 Tagen: 12,7 | | | nach 14 Tagen: 10,7 |
| | nach 28 Tagen: 12,3 | | | nach 28 Tagen: 10,6 |
| | nach 49 Tagen: 11,4 | | | nach 49 Tagen: 10,7 |
| | nach 56 Tagen: 11,0 | | | nach 77 Tagen: 10,5 |
| | nach 84 Tagen: 10,4 | | | nach 84 Tagen: 10,5 |
| Verfestigmgszeit | 2 min bei 130 °C | - | 30 min; die Temperatur wird in dieser Zeit von 90°C auf 170 °C angehoben | >20 Minuten |
| Glasfasergehalt [Gew.-%] nach DIN EN ISO 1172 | 55 | - | >50 | 55 |

Die Lagerstabilität der Prepregs wurde sowohl anhand der Glasübergangstemperatur (T_{g}) mittels DSC-Untersuchungen bestimmt, als auch anhand des NCO-Wertes [in Gew.-%]. Aus den Werten aus der Tabelle 1 geht hervor, dass die Vernetzungsfähigkeit des erfindungsgemäßen Prepregs durch die Lagerung bei Raumtemperatur über einen Zeitraum von 12 Wochen nicht beeinträchtigt wurde.

Die Verfestigungszeit ist die Zeit, bei der die Vernetzung der Polyurethanzusammensetzung vollständig ist, so dass keine Reaktionsenthalpie für die Vernetzungsreaktion mehr detektierbar ist.

Das erfindungsgemäße System aus Beispiel 1 zeigte direkt nach dem Vermischen der einzelnen Komponenten A) bis D) eine sehr niedrige Viskosität von ca. 10 mPas bei 40 °C auf, wohingegen das im Vergleichsbeispiel 3 beschriebene System unterhalb von 60 °C im festen Zustand vorlag und vor dem Imprägnierungsschritt zunächst aufgeschmolzen werden musste. Folglich wurde eine gute Imprägnierung der Fasern im Vergleichsbespiel 3 deutlich erschwert. Darüber hinaus war die Verfestigungszeit im erfindungsgemäßen System mit ca. 2 min bei 130 °C deutlich kürzer im Vergleich zum System aus Vergleichsbeispiel 3.

Im Vergleichsbeispiel 2 wurde anstatt des Polyols 1 mit 66 Mol-% sekundären OH-Endgruppen, das Polyol 2 mit 33 Mol-% sekundären OH-Endgruppen verwendet. Die molare Menge an latentem Katalysator Toyocat^{®} DB 40 blieb unverändert. Das resultierende Reaktionsgemisch reagierte bei Raumtemperatur innerhalb von 30 Sekunden fast komplett ab, so dass die Herstellung eines Prepregs nicht möglich war. Durch das Abreagieren des Reaktionsgemisches konnte auch kein B-Zustand erreicht werden, der unter erhöhter Temperatur wieder aufgeschmolzen werden kann. Die Glasübergangstemperatur des Reaktionsgemisches lag bereits nach 2 h bei Raumtemperatur bei 88°C, der NCO-Wert bei unter 5%.

Im Vergleichsbeispiel 4 wurde der latente Katalysator Toyocat^{®} DB 40, mit einer Schalttemperatur von ca. 70 °C, gegen eine molar entsprechende Menge des latenten Katalysators DY 9577^{®}, mit einer Schalttemperatur von ca. 120 °C, ausgetauscht. Durch Verwendung dieses Katalysators lag die offene Topfzeit vom Reaktionsgemisch bei >24 Stunden und der für Prepregs erforderliche B-Zustand wurde nur bedingt und erst nach einer Woche bei Raumtemperatur erreicht, da die Matrix nicht wie gewünscht nahezu klebfrei, sondern sehr klebrig vorlag. Die Aushärtezeit der Prepregs aus Vergleichsbeispiel 4 war mit über 20 Minuten bei 130 °C um ein vielfaches länger als im Vergleich zum erfindungsgemäßen Beispiel 1.

Die erfindungsgemäßen Prepregs waren im sogenannten B-Zustand nahezu klebfrei, sehr flexibel und konnten einfach zurechtgeschnitten und gut in die Form drapiert werden. Außerdem wies das erfindungsgemäße System eine Lagerstabilität von mindestens 12 Wochen auf.

## Patentansprüche

1. Prepregs enthaltend eine flächige Faserschicht, die mit nicht vollständig ausgehärtetem Polyurethan (Matrixmaterial) mit einem NCO-Gehalt von 8 Gew.-% bis 16 Gew.-% und mit einem T_{g}-Wert von unter 40°C, bevorzugt von unter 35°C (gemessen nach DIN EN ISO 53765-A-20) getränkt ist, wobei das nicht vollständig ausgehärtete Polyurethan erhältlich ist aus einem Reaktionsgemisch bestehend aus
A) einer Isocyanatkomponente ausgewählt aus der Gruppe bestehend aus aromatischen Di-, aromatischen Polyisocyanaten, deren polymere Homologen und Abmischungen daraus,
B) einer Polyolkomponente aus einem oder mehreren Polyesterpolyolen mit sekundären Hydroxyl-Endgruppen, deren Gehalt an sekundären Hydroxyl-Endgruppen zwischen 40 Mol-% und 100 Mol-%, bezogen auf den Gesamtgehalt aller Hydroxyl-Endgruppen in der Polyolkomponente liegt, mit einer zahlenmittleren OH-Zahl von 15 bis 1000 mg KOH/g und, einer zahlenmittleren Funktionalität von 1,9 bis 2,5,
C) einem oder mehreren latenten Katalysatoren, die bei Temperaturen von 50° bis 100°C katalytisch wirksam sind,
D) gegebenenfalls Hilfs- und/oder Zusatzstoffen, ausgenommen Polyepoxide,
wobei das Reaktionsgemisch bei 40 °C eine anfängliche Viskosität von 30 bis 500 mPas (gemessen nach DIN EN ISO 53019) aufweist und das Verhältnis der Anzahl der NCO-Gruppen der Komponente A) zu der Anzahl der OH-Gruppen der Komponente B) von 1,35:1 bis 10:1 ist.

2. Flächige Faserverbundbauteile enthaltend mindestens ein Prepreg gemäß Anspruch 1, wobei das oder die Prepregs vollständig ausgehärtet ist bzw. sind.

3. Verfahren zur Herstellung der Prepregs gemäß Anspruch 1, welches **dadurch gekennzeichnet ist, dass**
i) die Komponenten A) bis D) bei Temperaturen von 10° bis 80°C zur Herstellung einer Reaktivmischung vermischt werden, wobei die Komponenten A) bis D) die folgende Bedeutung haben
A) einer Isocyanatkomponente ausgewählt aus der Gruppe bestehend aus aromatischen Di-, aromatischen Polyisocyanaten, deren polymere Homologen und Abmischungen daraus
B) einer Polyolkomponente aus einem oder mehreren Polyesterpolyolen mit sekundären Hydroxyl-Endgruppen, deren Gehalt an sekundären Hydroxyl-Endgruppen zwischen 40 Mol-% und 100 Mol-%, bezogen auf einen Gesamtgehalt aller Hydroxyl-Endgruppen in der Polyolkomponente liegt, mit einer zahlenmittleren OH-Zahl von 15 bis 1000 mg KOH/g und einer zahlenmittleren Funktionalität von 1,9 bis 2,5,
C) einem oder mehreren latenten Katalysatoren, die bei Temperaturen von 50° bis 100°C katalytisch wirksam sind,
D) gegebenenfalls Hilfs- und/oder Zusatzstoffen, ausgenommen Polyepoxide,
und wobei die Reaktivmischung bei 40 °C eine anfängliche Viskosität von 30 bis 500 mPas (gemessen nach DIN EN ISO 53019) aufweist und das Verhältnis der Anzahl der NCO-Gruppen der Komponente A) zu der Anzahl der OH-Gruppen der Komponente B) von 1,35:1 bis 10:1 liegt,
ii) die Reaktivmischung aus i) auf eine flächige Faserschicht aufgetragen wird und teilweise härtet.

4. Verfahren zur Herstellung der Faserverbundbauteile gemäß Anspruch 2, welches **dadurch gekennzeichnet ist, dass** ein oder mehrere Prepregs hergestellt nach dem Verfahren gemäß Anspruch 3 bei 80 °C bis 140 °C und einem Druck von 1 bis 100 bar oder unter Vakuum innerhalb von 1 bis 4 Minuten vollständig ausgehärtet werden.

5. Verwendung der Prepregs gemäß Anspruch 1 und der Faserverbundbauteile gemäß Anspruch 2 im Bereich der Bau-, der Automobil-, der Luft- und Raumfahrt-Industrie, des Strassenbaus, der Energietechnik, im Boots- und Schiffbau und in hochbelasteten Strukturen.

## Claims

1. Prepregs comprising a sheet-like fiber layer impregnated with polyurethane (matrix material) that has not been completely hardened and that has NCO content of from 8% by weight to 16% by weight and a Tg value below 40°C, preferably below 35°C (measured in accordance with DIN EN ISO 53765-A-20), where the polyurethane that has not been completely hardened is obtainable from a reaction mixture composed of
A) an isocyanate component selected from the group consisting of aromatic diisocyanates, aromatic polyisocyanates, and their polymeric homologs and blends thereof,
B) a polyol component made of one or more polyester polyols having secondary hydroxy end groups, their content of secondary hydroxy end groups being from 40 mol% to 100 mol%, based on the total content of all hydroxy end groups in the polyol component, with a number-average OH number of from 15 to 1000 mg KOH/g and a number-average functionality of from 1.9 to 2.5,
C) one or more latent catalysts which have catalytic activity at temperatures of from 50° to 100°C,
D) optionally auxiliaries and/or additional substances, with the exception of polyepoxides,
where the reaction mixture at 40°C has an initial viscosity of from 30 to 500 mPas (measured in accordance with DIN EN ISO 53019), and the ratio of the number of NCO groups of component A) to the number of OH groups of component B) is from 1.35:1 to 10:1.

2. Sheet-like fiber-composite components comprising at least one prepreg according to Claim 1, where the prepreg(s) has/have been completely hardened.

3. Process for the production of the prepregs according to Claim 1, which is **characterized in that**
i) components A) to D) are mixed at temperatures of from 10° to 80°C for the production of a reactive mixture, where the definitions of components A) to D) are as follows:
A) an isocyanate component selected from the group consisting of aromatic diisocyanates, aromatic polyisocyanates, and their polymeric homologs and blends thereof,
B) a polyol component made of one or more polyester polyols having secondary hydroxy end groups, their content of secondary hydroxy end groups being from 40 mol% to 100 mol%, based on a total content of all hydroxy end groups in the polyol component, with a number-average OH number of from 15 to 1000 mg KOH/g and a number-average functionality of from 1.9 to 2.5,
C) one or more latent catalysts which have catalytic activity at temperatures of from 50° to 100°C,
D) optionally auxiliaries and/or additional substances, with the exception of polyepoxides,
and where the reactive mixture at 40°C has an initial viscosity of from 30 to 500 mPas (measured in accordance with DIN EN ISO 53019), and the ratio of the number of NCO groups of component A) to the number of OH groups of component B) is from 1.35:1 to 10:1,
ii) the reactive mixture from i) is applied to a sheet-like fiber layer and cures to some extent.

4. Process for the production of the fiber-composite components according to Claim 2, which is **characterized in that** one or more prepregs produced by the process according to Claim 3 is/are completely hardened at from 80°C to 140°C and a pressure of from 1 to 100 bar or in vacuo within from 1 to 4 minutes.

5. Use of the prepregs according to Claim 1 and of the fiber-composite components according to Claim 2 in the sector of the construction industry, of the automobile industry, of the aerospace industry, of road construction, or of power engineering, in boatbuilding and shipbuilding, and in highly loaded structures.

## Revendications

1. Pré-imprégné contenant une couche de fibres plate, qui est imprégnée avec du polyuréthane non complètement durci (matériau de matrice) ayant une teneur en NCO de 8 % en poids à 16 % en poids et ayant une valeur Tg de moins de 40 °C, de préférence de moins de 35 °C (mesurée selon DIN EN ISO 53765-A-20), le polyuréthane non complètement durci pouvant être obtenu à partir d'un mélange réactionnel constitué par
A) un composant isocyanate choisi dans le groupe constitué par les diisocyanates aromatiques, les polyisocyanates aromatiques, leurs homologues polymères et leurs mélanges,
B) un composant polyol constitué par un ou plusieurs polyester-polyols contenant des groupes terminaux hydroxyle secondaires, dont la teneur en groupes terminaux hydroxyle secondaires est comprise entre 40 % en moles et 100 % en moles, par rapport à la teneur totale de tous les groupes terminaux hydroxyle dans le composant polyol, ayant un indice OH moyen en nombre de 15 à 1 000 mg KOH/g et ayant une fonctionnalité moyenne en nombre de 1,9 à 2,5,
C) un ou plusieurs catalyseurs latents, qui sont catalytiquement efficaces à des températures de 50 °C à 100 °C,
D) éventuellement des adjuvants et/ou additifs, à l'exception des polyépoxydes,
le mélange réactionnel présentant à 40 °C une viscosité initiale de 30 à 500 mPas (mesurée selon DIN EN ISO 53019) et le rapport entre le nombre de groupes NCO du composant A) et le nombre de groupes OH du composant B) étant de 1,35:1 à 10:1.

2. Composant composite de fibres plat contenant au moins un préimprégné selon la revendication 1, dans lequel le ou les préimprégnés sont complètement durcis.

3. Procédé de fabrication du préimprégné selon la revendication 1, qui est **caractérisé en ce que**
i) les composants A) à D) sont mélangés à des températures de 10 °C à 80 °C pour la fabrication d'un mélange réactif, les composants A) à D) ayant la signification suivante :
A) un composant isocyanate choisi dans le groupe constitué par les diisocyanates aromatiques, les polyisocyanates aromatiques, leurs homologues polymères et leurs mélanges,
B) un composant polyol constitué par un ou plusieurs polyester-polyols contenant des groupes terminaux hydroxyle secondaires, dont la teneur en groupes terminaux hydroxyle secondaires est comprise entre 40 % en moles et 100 % en moles, par rapport à la teneur totale de tous les groupes terminaux hydroxyle dans le composant polyol, ayant un indice OH moyen en nombre de 15 à 1 000 mg KOH/g et ayant une fonctionnalité moyenne en nombre de 1,9 à 2,5,
C) un ou plusieurs catalyseurs latents, qui sont catalytiquement efficaces à des températures de 50 °C à 100 °C,
D) éventuellement des adjuvants et/ou additifs, à l'exception des polyépoxydes,
et le mélange réactionnel présentant à 40 °C une viscosité initiale de 30 à 500 mPas (mesurée selon DIN EN ISO 53019) et le rapport entre le nombre de groupes NCO du composant A) et le nombre de groupes OH du composant B) étant de 1,35:1 à 10:1,
ii) le mélange réactif de i) est appliqué sur une couche de fibres plate et partiellement durci.

4. Procédé de fabrication d'un composant composite de fibres selon la revendication 2, qui est **caractérisé en ce qu'**un ou plusieurs préimprégnés fabriqués par le procédé selon la revendication 3 sont complètement durcis à 80 °C à 140 °C et une pression de 1 à 100 bar ou sous vide en 1 à 4 minutes.

5. Utilisation du préimprégné selon la revendication 1 et du composant composite de fibres selon la revendication 2 dans le domaine de l'industrie du bâtiment, automobile, aéronautique et aérospatiale, de la construction routière, de la technique énergétique, dans la construction de bateaux et de navires et dans les structures hautement chargées.
